# EUROPEAN PATENT SPECIFICATION

(11) **EP 2 756 146 B1**
(45) Date of publication and mention of the grant of the patent: **05.04.2017**
(21) Application number: 12756544.8
(22) Date of filing: 21.08.2012
(51) Int. Cl.: E06B 7/32

(54) **PET DOOR WITH RFID DETECTION**
TÜR FÜR HAUSTIERE MIT RFID ERKENNUNG
PORTE POUR ANIMAUX DOMESTIQUES AVEC DÉTECTION RFID

(30) Priority: 12.09.2011 GB 201115718
(43) Date of publication of application: 23.07.2014
(73) Proprietor: Sureflap Ltd, Cambridge Cambridgeshire CB4 8QP (GB)
(72) Inventor: BANK, Andrew Douglas, Cambridge Cambridgeshire CB23 8AR (GB); HILL, Nicholas Patrick Roland, Cambridge CB24 8TJ (GB)
(74) Representative: Martin, Philip John
(86) International application number: PCT/GB2012/052043
(87) International publication number: WO 2013/038141

(56) References cited:
- EP-A1- 0 309 110
- WO-A2-2009/090426
- US-A- 4 022 263
- US-A- 5 813 364
- US-A1- 2006 252 366
- US-A1- 2008 072 843
- US-A1- 2010 236 494

## Description

### FIELD OF INVENTION

This invention relates to pet doors for allowing selective control of entry/exit to and from a building, in particular for multiple animals. We also describe related methods of programming a pet door, pet doors with multiple operational modes including a safety mode, and pet doors with a robust anti-intruder function.

### BACKGROUND TO THE INVENTION

In EP2080172 Hill describes an RFID pet door that operates on an RFID tag that is either embedded under the skin of the pet or attached to the animal, such as on a collar. The device shown in this patent implements selective entry. Here the owner can go through a process where the pet door learns the ID codes that correspond to their animals and the unit will subsequently open up only for these animals, allowing them access to the home. This invention provides a useful function of a safe home environment for animals that are allowed to go outside, preventing intruder animals from entering their home.

In EP2080172 the arrangement of the antenna on one side of the door, closer to the outside of the house gives the benefit of putting the sensitive RFID reader closer to the position of the animal's RFID tag, particularly if it is a sub-dermal transponder.

While the system described by Hill also allows for some additional control of the access inside or outside the house with an additional manual lock or additional electronic locks or locking modes, it does not allow select pets from a group of pets access to the outside, while denying access to one or more other pets.

We will therefore describe improved pet doors.

For use in understanding the invention, we note that US2008072843 (A1) (Malacarne et al, published Mar. 27, 2008) discloses an access device for pets, wherein the releasing and locking of a door can be controlled by means of an electronic device, the electronic device configured in such manner that any RFID devices located in proximity to a reader device can be included into the accession list by an input to a simple switching device.

US2006252366 (A1) (EU Philip, published Nov. 9, 2006) discloses an animal identification and entry control system based on a RFID system including an animal collar-mounted RFID tag, and RFID circuitry including a single antenna housed within a bezel placed forward of and surrounding the entry aperture to optimize signal reception.

US5813364 (A) (Harrison, Sep. 29, 1998) discloses an automatic pet door, enclosed within a housing, having a pet door located in between two sensors. The two sensors are positioned on arms that extending perpendicular to the housing. An infrared beam extends between the two sensors. When the beam is interrupted, a signal is sent to a motor located on top of the pet door. The motor is in constant connection with a power supply. A rack and pinion device works in conjunction with the motor. When a pet walks in between the two arms and the beam is broken, the motor causes the rack and pinion device to engage with teeth found on the top portion of the pet door, thus causing the door to open. Once the pet walks through the open door and the beam is once again continuous, the door closes.

### SUMMARY OF THE INVENTION

According to the present invention, there is a provided a selective pet door as defined in the independent claim. A preferred embodiment is defined by the dependent claim.

### BRIEF DESCRIPTION OF THE DRAWINGS

For a better understanding of the invention and to show how the same may be carried into effect, reference will now be made, by way of example, to the accompanying drawings, in which:
Figure 1 shows a pet door.
Figure 2 shows a side view of a pet door.
Figure 3 shows an illustration of a cat using the pet door of figure 2. Figure 3A shows the cat approaching from the inside of the house. Figure 3B shows the cat approaching from the outside of the house.
Figure 4 shows a pet door with two optical proximity detectors.
Figure 5 shows a pet door with two optical proximity detectors that detect a reflection from a cat.
Figure 6 shows a pet door with two door rotation sensors.
Figure 7 shows a flow chart for a single learn mode.
Figure 8 shows a flow chart for a first learn mode of entry and exit, and a second learn mode of entry only.
Figure 9 shows a flow chart for a first learn mode of entry allowed, and a second learn mode of exit allowed.
Figure 10 shows a block diagram of the different electronic elements of a pet door.
Figure 11 illustrates a mounting method for a pet door with mounting brackets between first and second assemblies.
Figure 12 shows a pet door with a step down feature between the two doors and a drain hole.
Figure 13 shows an intruder animal attempting to enter the house.
Figure 14 shows an embodiment of the present invention, the embodiment being a selective pet door with a single door and multiple RFID antennae.

### DETAILED DESCRIPTION OF EMBODIMENTS

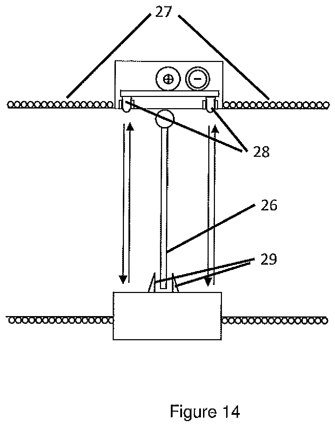

We describe below techniques and configurations, variously referred to as implementations, variants, and arrangements, that are examples useful for understanding the present invention. We further describe below embodiments of the present invention, with reference to Fig. 14.

A selective pet door may allow selective control of entry/exit to/from a building, the pet door comprising: a tunnel portion defining a tunnel for entry/exit of a pet; first and second moveable flaps, one towards either end of said tunnel; and first and second controllable locks each for a respective said flap, wherein said first controllable lock is controllable to selectively enable and inhibit opening of said first flap, and wherein said second controllable lock is controllable to selectively enable and inhibit opening of said second flap.

Arrangements are particularly suitable for implementing selective entry control techniques. Thus in some preferred variants the pet door also includes an electronic control system to control the first and second locks and an RFID (or other) tag reader to read an RFID (or other) tag on a pet, in preferred variants an implanted microchip tag, to control the pet door in response to the tag code identification. More particularly in some preferred variants the electronic control system is configurable by a user to provide selective entry/exit control for a plurality of tagged pets (having different respective tag codes), enabling the user to define, for each pet, an allowed direction of movement of the pet through the pet door.

Thus variants of the system include (non-volatile) storage, for example Flash memory or battery-backed-up memory storing data defining, for each animal, one or more allowed directions of movement of the animal through the pet door. In one approach a list of permitted and/or forbidden movements (one may be inferred from the other) is stored for each animal; in another approach a list of animals, more particularly animal identification codes, is provided for each allowed direction of movement or combination of directions - for example `allows entry', 'allows exit'.

In some variants of the pet door each of the locks allows opening of the respective flap inwards, towards the tunnel and is controllable to selectively enable and disable or inhibit opening of the flap outwards away from the tunnel. To achieve this a flap may be hinged at the top, the lock providing a controllable stop on an outer surface of the pet door. Thus, broadly speaking, an animal may enter the tunnel between the flaps, but may not exit the flap on the far side without the respective lock being controlled to enable the animal to exit the pet door.

A preferred implementation of the pet door provides a safety mode which is implemented by providing two selectable use modes for the pet flap, an entry and exit use mode, and an entry-only use mode. In this way even where a pet is not permitted to leave through the pet door, if the pet does find itself outside it can nonetheless return. This is useful for example, where a kitten might follow an older cat through the pet door as the older cat leaves - the safety mode enables the kitten to return safely.

In preferred variants the pet door includes at least one proximity detector to detect attempted entry of a pet into or through the pet door. This may be employed for a range of functions, for example to turn the RFID reader on and/or to sense a direction of travel of an animal through the pet door. It will be recognised, however, that it is not essential to sense the direction of travel to provide a selective entry/exit function. Nonetheless advantageously two proximity detectors may be employed, for example one towards either end of the tunnel, and the electronic control system may then use signals from these detectors to determine a direction of movement of a pet through the pet door, to control the controllable locks in response. In this way, for example, a lock on the entry or exit side may be selectively activated as indicated by the direction of travel of the animal sensed by the proximity detectors, again to save power.

A proximity detector may, for example, comprise an optical detector, more particularly at one side of the tunnel a system to generate and sense a beam of light reflected from an opposite side of the tunnel. Additionally or alternatively a proximity detector may comprise a flap rotation sensor to sense rotation of a flap about a hinge. In one implementation, rather than providing one proximity detector at or towards each end of the tunnel, a pair of proximity detectors is provided at one end of the tunnel to perform the direction sensing. More particularly one of these proximity detectors may be, for example, an optical sensor and the other a sensor sensing rotation of a flap. In this way both sensors can be located at one end of a tunnel - the interior end when the cat flap is mounted on a door or wall, thus protecting the associated electronics from the environment of the part of the pet door on the outside of the building.

Where a direction of motion of a pet through the pet door is sensed, the electronic control system may, in variants, store two sets of permission data defining allowed directions of movement of a pet. This permission data may comprise a first set of data for one or more identified pets defining a first set of allowed/forbidden directions of movement of an identified pet, and a second set of permission data for one or more identified pets defining a second set of allowed/forbidden directions of movement of the identified pet or pets. The direction of movement sensed by the proximity detectors may then be employed by the electronic control system to select one of these sets of permission data for use in controlling movement of an identified pet through the pet door.

In some preferred variants the pet door electronic system has a plurality of learn modes to learn and store permission data for a pet identified by the RFID (or other tag) reader. In variants this permission data defines, for each of two directions of movement through the pet door, whether an identified pet is permitted to pass through the pet door. More particularly in variants the learn modes comprise an 'entry and exit' learn mode, where a pet may pass in both directions through the pet door, and an 'entry only' learn mode, in which the pet is committed to pass in only a single direction thourgh the pet door. Alternatively, however, these modes may be programmed via user interface rather than learnt. Thus additionally or alternatively the electronic control system may be programmable to define, for each of a plurality of differently identified pets, permitted modes of use/motion through the pet door.

The mechanical configuration of the pet door makes the system particularly suitable for an RFID reader as, because a pet enters the tunnel before the door on the far side is controlled, there is a convenient space where the pet is positioned for tag reading. Thus in some preferred variants the pet door comprises a loop antenna for the RFID reader encompassing the tunnel. With other RFID reader arrangements an antenna coil or other antenna arrangement may be located in, on or adjacent the tunnel defined by the tunnel position of the pet door, for a similar purpose.

In preferred variants the tunnel position of the pet door includes a formation with a straight or concave surface defining a step down to a region of increased floor depth of the tunnel between the moveable flaps. This step formation is located such that a moveable flap moves or swings over the downwards step. In this way if an animal attempts to withdraw a paw from behind a flap which has been pushed inwards into the tunnel, rather than the downwards swinging motion of the flap trapping the paw against the floor of the tunnel with increasing force as the paw is withdrawn, the action of withdrawing a paw tends to push the flap inwards, maintaining an aperture through which the paw may be withdrawn without injury. Preferably this region of increased floor depth includes one or more drainage holes for any water which may collect.

In one convenience to manufacture implementation the pet door comprises first and second door parts each bearing a moveable flap. One of these door parts includes the tunnel position and mounts an external frame. This external frame in turn mounts an adjustable length attachment or bracket, attaching the external frame, and hence the first door part, to the second door part. In this way substantially the same moulding may be employed for the first and second door parts, whether one door part is used on its own or in combination with a second door part. This therefore facilitates manufacture of a range of pet doors with either one or two moveable flaps.

In a related method of programming a selective pet door installed in a building, for selective control of pet entry and exit to and from the building, the selective pet door comprising a tunnel including a moveable flap, in variants with a moveable flap at either end, and one or more controllable locks for the or each flap to inhibit (outward) opening of the flap and egress from the tunnel by a pet, the pet door further comprising an a tag reader to read a tag on a pet identifying the pet and to control said one or more locks in response to control movement of a pet though the pet door, the method comprises: providing a plurality of learn modes for said pet door, said learn modes defining whether an identified pet is permitted to exit and enter the building; providing one or more user controls to enable a user to activate a selected said learn mode; activating a selected said learn mode in response to a user; and using a tagged pet to program the pet door in said selected learn mode.

In some preferred variants the learn modes comprise an entry and exit mode, and an entry-only mode, as previously described.

Thus a related arrangement provides a selective pet door for selective control of pet entry into and exit from a building, the selective pet door comprising a tunnel with a moveable flap at either end, and a controllable lock for each flap to inhibit outward opening of the flap and egress from the tunnel by a pet, the pet door further comprising a tag reader to read a tag on a pet identifying the pet and to control said locks in response, to control movement of a pet though the pet door, the selective pet door

In some preferred implementations of this 'safety mode' door the antenna that is split with part on one side of a door and part on the other. An example of an embodiment of the present invention is illustrated in Figure 14, although the two parts of the split antenna may have different dimensions and/or numbers of windings. For example the antenna may have more turns on the inside where the tunnel there is shorter, in an embodiment in which the flap is towards the inside of the house and the tunnel extends through the exterior wall. Additionally or alternatively in such an embodiment the part of the loop antenna on the inside may have a smaller dimension (transverse cross-sectional area).

In preferred embodiments of the present invention, the two parts of the antenna are connected in series and driven together, and hence couple together inductively. This is not essential - the antenna parts may be connected in parallel, but then potentially one antenna part can take more of the shared current than the other.

Surprisingly it has been found that connecting the antennas together, in particular in series, provides almost the same effectiveness (eg field energy/read range) as if each antenna were operated separately. For example, the reader could be switched between the antennas, which might be presumed to be a better approach. However in practice the RFID tag reading involves driving an antenna, and when only one antenna is driven at once this can induce relatively high voltages in the other antenna, which in turn requires a circuit design to accommodate this. Connecting the antennas together, in either series or in parallel, mitigates this whilst providing almost the same effectiveness as when operating the loops separately. In embodiments the end result is an antenna with similar properties to an antenna on the outside only, but with an improved field pattern for good read range on both sides of the door.

Although it is preferable to employ two locks in this manner it is not essential - for example a single lock or locking mechanism could operate on the hinge of the moveable flap to control access through the door.

Many alternative implementations of a selective pet door are also possible, including ones with a single RFID antenna and single door. The use of the safety mode, different lists for animals entering and exiting the house, and multiple learn modes to setup such operation may also have beneficial application in such implementations.

In variants the more turns are provided on one side of the flap than the other. More specifically, in variants the tunnel is asymmetrical, extending further to one side of the flap than the other, the long side of the tunnel extending through the wall in which the door is mounted, the flap being located on the interior side of the wall (where the tunnel may simply be a stub). With such an arrangement, an animal may partially enter the tunnel where the tunnel is long, facilitating reading the tag, but on the shorter side the tag must effectively be read at a greater range, and thus providing a larger number of turns on this side can be helpful.

Features of the previously described methods, arrangements and variants may also be employed with this safety-mode door.

A still further advantage of a pet door as described above is that the pet door can be arranged so that one inwardly hinged flap obstructs and interferes with the inward hinging of the other flap (where the controllable lock for the other flap is not activated). This can therefore be employed to provide a particularly secure entry/exit control mechanism and, in particular, this technique can be employed to provide a pet door which is robust against a determined effort at impermissible entry by an untagged intruder animal such as a raccoon.

Thus in a further arrangements is provided an anti-intruder pet flap, the pet flap comprising a tunnel portion defining a tunnel for a pet, the tunnel portion bearing a pair of flaps, one towards either end of the tunnel, each flap being hinged at the top, and wherein at least one said flap is provided with a controllable lock to, when operated, inhibit the flap from hinging outwards away from said tunnel, wherein said flaps are mounted to enable a flap to swing inwards towards said tunnel, and wherein, when a first of said flaps is in an inwardly swung position said first flap inhibits the second of said flaps from swinging inwards. In some variants each flap may be provided with a controllable lock.

In a still further arrangement is provided a selective pet door with paw-protect, the pet door allowing selective control of entry/exit to/from a building, the pet door comprising: a tunnel portion defining a tunnel for entry/exit of a pet; at least one moveable flap mounted in or adjacent an end of said tunnel; and wherein said tunnel portion includes a formation with a straight or concave surface defining a step down to a region of increased floor depth of said tunnel adjacent said at least one moveable flap, and wherein said moveable flap swings over said downwards step.

In embodiments of the present invention, a selective pet door allows selective control of pet entry/exit to/from a building, the pet door comprising: a tunnel portion defining a tunnel for entry/exit of a pet; at least one moveable flap within said tunnel; a controllable lock for the flap; and a tag reader to read a tag on a pet identifying the pet and to control said controllable lock to control movement of a pet through the pet door; and a loop antenna for said tag reader, wherein said loop antenna encompasses said tunnel; wherein said loop antenna is split such that a first and second portions of said loop antenna are disposed to either side of said moveable flap.

In variants of such embodiments of the present invention, the first and second portions of the loop antenna are connected in series with one another and couple together inductively.

Broadly speaking we will describe below a selective exit pet door comprising an opening through which an animal is either allowed access or not. An inner door is situated across the opening towards the inside of the house with a lock that can selectively stop the door from opening inwards. This lock is controlled electronically, either allowing access to the inside or preventing access.

An outer door is situated across the opening towards the outside of the house with a lock that can selectively stop the door from opening outwards. This lock is controlled electronically, either allowing access to the outside or preventing access.

Such a pet door may recognise an animal's ID code and selectively either let them access to the outside, while still implementing the selective entry function, or bar them from accessing the outside. Uses for a pet door with this function include when an owner has a number of pets, some of which are allowed access to the outside and others that are kept indoors. Examples include when an owner has an older cat who goes outside and a kitten who has yet to be inoculated against common illnesses and as such should be kept indoors until it is older. Entry to the home may still be restricted to the owners pets only, preventing access by intruder animals.

In variants a single RFID antenna surrounds the opening and is mounted between the inner and outer doors. It may fit entirely in the space between the two doors or may extend beyond either door towards the inside and/or the outside of the house.

The pet door may also include a sensor that detects that an animal is either trying to enter or leave the house. This may take the form of a single optical detector that is situated between the doors and is triggered when a pet's head is put at least partially into the tunnel between the two doors. Alternatives to a single optical sensor include:
- Having two sensors that detect the approach of a pet on the inside and on the outside of the house, respectively.
- Sensors that detect door movement, as a result of an animal pushing the inner or outer door.
Many alternative types of sensor may be used to detect that an animal is either trying to enter or leave the house.

In one variant the reader is run continually to read for an RFID tag that may be one of the owner's pets. In alternative variants, the RFID reader is only activated when the sensor has indicated an animal is trying to enter or leave the house. Such variants may have much lower power requirement and may be battery powered. The high power requirement of running the reader continually may necessitate an external power supply.

In one variant, when a pet attempts to leave the house it pushes the inner door open towards the outside of the house. An optical sensor in the tunnel detects the pet's presence in the tunnel and activates the RFID scanner. If the pet's ID matches one stored in memory corresponding to an animal allowed outside then the pet door opens the lock on the outer door. Now the outer door is free to open outwards and the animal may push their way through both doors to gain access to the outside world. If the pet's ID does not match that of an animal allowed outside then the lock on the outer door is not opened and access through the outer door to the outside is barred.

When a pet attempts to enter the house from outside it pushes the outer door open towards the inside of the house. An optical sensor in the tunnel detects the pet's presence in the tunnel and activates the RFID scanner. If the pet's ID matches one stored in memory corresponding to an animal allowed inside then the pet door opens the lock on the inner door. Now the inner door is free to open inwards and the animal may push their way through both doors to gain access to the house. If the pet's ID does not match that of an animal allowed inside then the lock on the outer door is not opened and access through the outer door to the outside is barred.

The two electronic locks in the inner and outer door may be controlled independently or may be wired in parallel. Such a parallel connection means that both locks open when the inner or outer door is unlocked in the scenarios described above. However such operation still allows the access to the inside or outside as desired and described above.

The list of animals allowed inside may be the same as the list of the animals allowed outside. Alternatively the lists may be different. There may be an advantage of only allowing certain animals from a group of house pets free access to the outside, but then allowing all of the house pets access into the house. If one pet that is barred from access to the outside does in fact gain access to the outside, for example by following another pet before the doors close behind them, then it would be beneficial to allow the escaped pet back into the house. In this case the ID code of the escaped pet should appear in the list of animals allowed inside but not those allowed outside.

One advantage of this arrangement of two doors with an antenna in between is that whenever an animal is trying to enter or exit the house it puts its head through the RFID antenna. The antenna is therefore placed closer to the RFID tag on or under the skin of the pet. The read range of the RFID reader in the pet door is now very similar to that of a purely selective entry pet door, as disclosed in EP2080172. Furthermore, in order to achieve this similar read range there is a cost saving over alternative setup where one door is used and two antennae are used, one situated on the inside and one on the outside of the door. Such an alternative arrangement has the added cost of the second antenna and associated electronics, whereas the arrangement disclosed here only requires the second door and locking mechanism. Moreover the arrangement described here may make efficient use of the plastic parts designed for operation in the selective entry pet door, with minimal extra investment in new mould tools required.

In another variant the pet door may include additional locks to control opening of the two doors in either direction. These may be manual override locks that stop opening in one or both directions. Alternatively it may comprise an additional electronic lock on one or both of the doors. Use of such additional locks may include keeping pets in at night or locking the door completely for security when the pet door is not in use. Control over the locks may be electronic and may use a timer to change the locking mode depending on the time of day. Setup and control of the locking modes may be via buttons on the pet door or via an external panel or computer connected to the pet door via a cable or wireless interface. The locking mode may be controlled over the internet.

In variants there is a learn process whereby the owners pets are read by the pet door and their ID codes stored in memory into the lists of pets allowed inside or outside. This learn process may take the form of learning the next animal to pass through the pet door. In one variant all animals are stored in memory using the same learn process. The entry and exit access of each code is then set using a panel on the pet door or via a computer connected to the pet door via a cable, wireless interface, internet, etc.

In alternative variants there may be more than 1 learn mode. For example, in one learn mode the animals that are allowed to exit the house are stored, in a second learn mode the animals that are allowed to enter the house are stored. It may be that all animals allowed to exit the house are automatically put on the list of animals allowed to enter the house, and the second mode is only used to learn the animals ID codes who are not allowed to exit the house. In this way all the owners pets are allowed access to the house, even if they are not purposefully allowed to exit the house. This protects against an animal accidentally managing to leave the house, in which case it is not locked outside.

In an alternative variant the ID codes may be inputted into the pet door, rather than the pet door reading the ID codes from the pets. Such inputting may be via a terminal on the pet door or via a computer or similar device connected to the pet door via a cable, wireless link, internet, etc.

In some variants the pet door may beneficially incorporate a step down between the two doors. This helps ensure that a paw pushed out under the door and pulled back is not pinched by the door. This minimises the chance of injury to any animal using the door.

In some variants the region between the doors also incorporates a drain hole to allow water to drain away. This is particularly useful if the pet door incorporates a step down between the doors, which would otherwise form a region that would collect water.

In some variants the pet door is assembled as follows. A first assembly includes the inner door and tunnel that incorporates the antenna. The first assembly is mounted in place, with an external frame completing the installation. A second assembly includes the outer door and a collar that mates with the end of the tunnel of the first assembly. This is pushed onto the end of the tunnel. A separate set of fixings connect the second assembly to the first assembly permanently via the external frame. This set of fixings is adjustable in length before it is fixed in place in order to cope with the variable position of the tunnel end in relation to the external frame that is a consequence of the first assembly being mounted into different door (or wall) thicknesses. Finally an external cover is used to cover the gap from the second assembly to the external frame of the first assembly. In this assembly the pet door looks like a conventional pet door installation on the inside of the house, which is the most important side aesthetically. The increased depth of the whole assembly pokes out of the door towards the outside of the house.

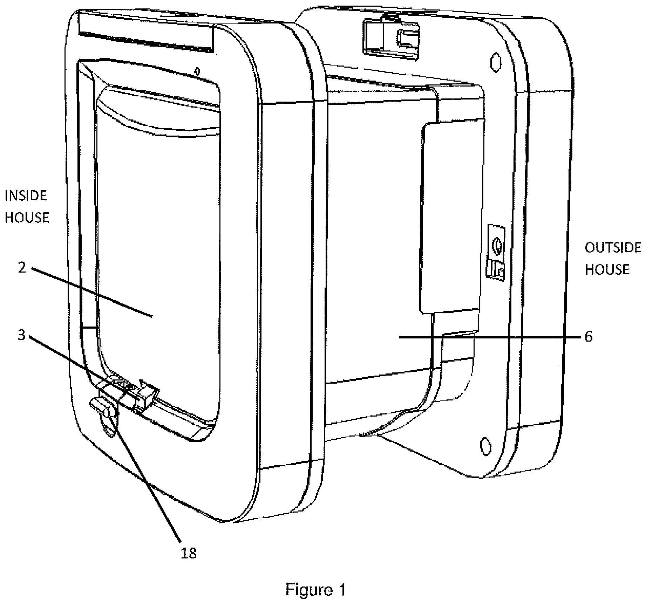

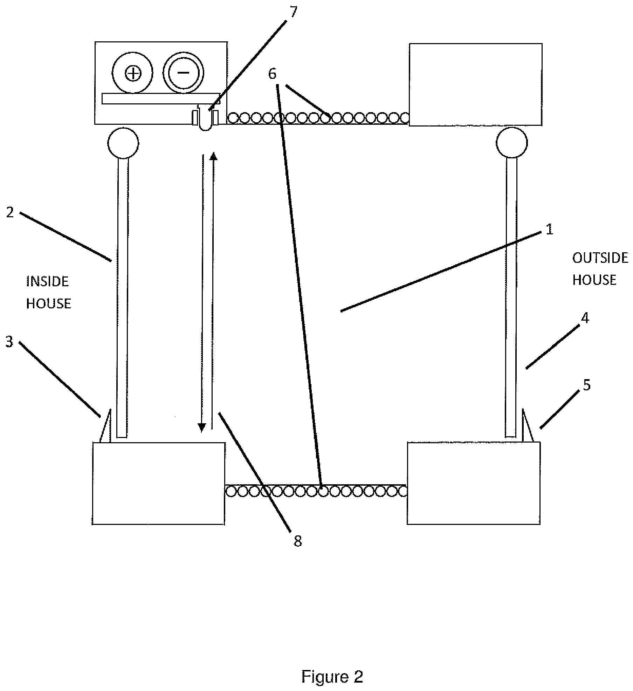

Referring now to Figure 1, this shows an implementation of a pet door. Figure 2 shows a similar implementation in side view to illustrate the different elements. The implementation comprises an opening 1 through which an animal is either allowed access or not. An inner door 2 is situated across the opening towards the inside of the house with a lock 3 that can selectively stop the door from opening inwards. This lock is controlled electronically, either allowing access to the inside or preventing access.

An outer door 4 is situated across the opening towards the outside of the house with a lock 5 that can selectively stop the door from opening outwards. This lock is controlled electronically, either allowing access to the outside or preventing access.

A single RFID antenna 6 surrounds the opening and is mounted between the inner and outer doors. In this variant it fits entirely in the space between the two doors. In alternative variants it may extend beyond either door towards the inside and/or the outside of the house.

The pet door in figure 2 also includes a sensor that detects that an animal is either trying to enter or leave the house. This takes the form of an optical detector 7 that is situated between the doors. This sensor produces a beam of infrared light 8 that reflects from the bottom of the tunnel and is sensed at the top of the tunnel. When a pet puts its head into the tunnel it interrupts the beam and its presence is registered.

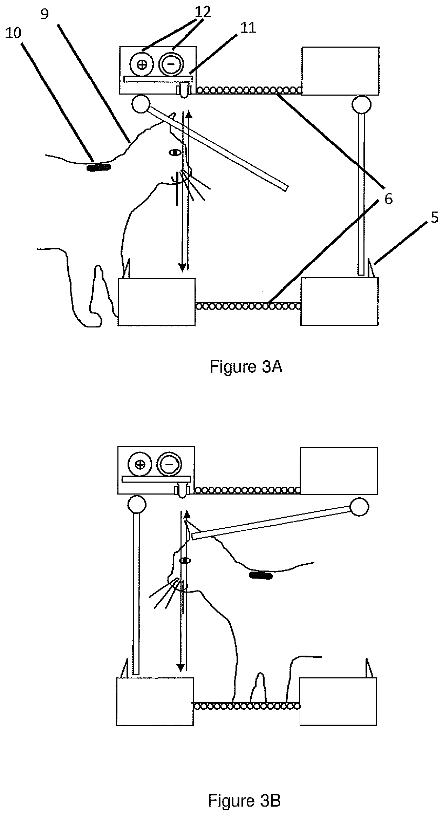

Operation of the pet door is illustrated in figure 3. Figure 3A shows a cat 9 attempting to leave the house. The cat pushes the inner door open towards the outside of the house. As it puts its head into the tunnel it breaks the beam of the proximity detector and its presence is registered. At this point the pet door tries to read the RFID tag 10 embedded in the cat with the RFID antenna 6. The RFID reader PCB 11 and battery power 12 are also shown in the figure. Although an embedded tag is shown, an alternative is to use an external RFID tag, such as a collar mounted tag. Once the RFID read completes the ID number of the tag is compared to a list of valid ID numbers corresponding to pets that are allowed to exit the house. If there is a match to this list then the outer lock 5 is opened up and the cat is allowed free access to the outside by pushing through the outer door. If there is no match to this list then outer lock is not opened and the cat is not allowed access through the outer door to the outside.

The operation of the pet door in the alternative direction is shown in figure 3B. Figure 3B shows a cat attempting to enter the house from the outside of the house. The cat is able to push through the outer door and puts its head up to the inner door. This breaks the light beam of the proximity detector, and the cat's presence is registered. The RFID reader attempts to read the cat's ID number of their tag and compares this to a list of valid ID numbers corresponding to pets that are allowed to enter the house. If there is a match to this list then the inner lock 5 is opened up and the cat is allowed free access to the inside by pushing through the inner door. If there is no match to this list then the inner lock is not opened and the cat is not allowed access through the inner door to the inside.

In this variant the inner and outer locks may be connected in parallel and operated simultaneously. This does not affect the operation as described above as the inner lock does not stop the inner door from opening outwards, as shown in figure 3A and the outer lock does not stop the outer door from opening inwards as shown in figure 3B.

In this variant the list of cats allowed to enter and exit the house may be the same. Alternatively if the lists of cats allowed to enter and exit the house are not the same then the inner and outer locks may be independently controlled accordingly. For example if an animal is detected and its ID code corresponds to an animal only allowed to enter the house, but not exit the house, then the inner lock only is opened. If the detection was actually an animal trying to enter the house then it would then be allowed inside. If the detection was actually an animal trying to exit the house then it would not be allowed outside as the outer lock would not be opened. In a similar manner if an ID corresponds to an animal allowed to enter and exit the house then both locks are opened up. In this way independent control over the locks allows operation with different lists of animals allowed to enter and exit the house.

The use of the proximity sensor in the above variant allows operation at low power which is useful for battery powered operation. However, operation without a proximity sensor is also possible, and the RFID reader may be left permanently on or may be regularly is switched on to try to read the ID tag of an animal in its read field. Once an ID tag is read and if it matches one of the ID tags in the stored tags list then the corresponding lock or both locks are opened and the animal is allowed to enter or leave the house as required.

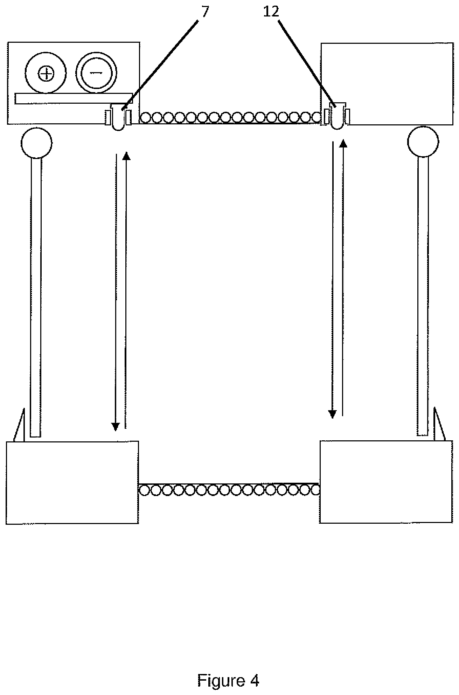

Figure 4 shows an alternative implementation of a pet door which includes two optical proximity sensors. These are mounted on the inner and outer sides of the pet door. If the inner proximity sensor 7 is activated before the outer proximity sensor 12 then the pet door infers that an animal is attempting to exit the house and the ID number from said animal is compared to a list of animals allowed to exit the house. Similarly if the outer proximity sensor is registered before the inner proximity sensor then an animal is attempting to enter the house and the list for comparison of the ID number is the list of animals allowed to enter the house.

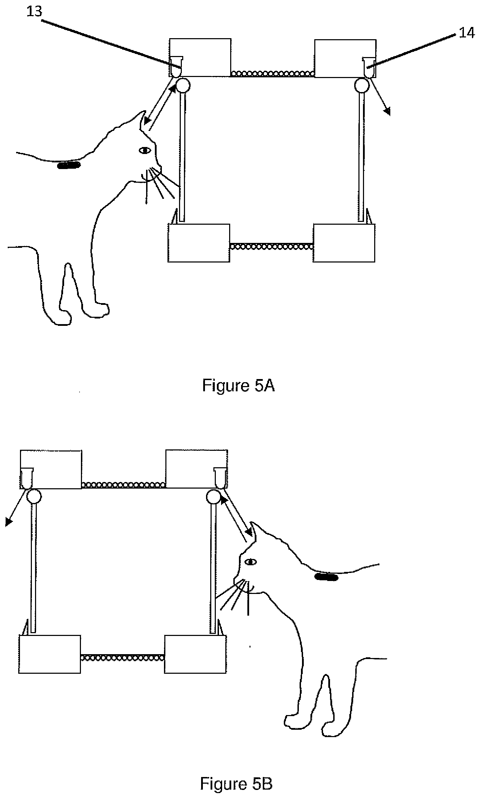

Figure 5 illustrates an alternative implementation of a pet door. Figure 5A shows the approach of a pet from the inside of the house, which is detected by one of a pair of optical sensors 13 and 14. The inner optical detector 13 detects a reflection from the cat and activates the reader, as for the previous implementation. Similarly figure 5B shows the approach of the pet from the outside of the house, which is detected by the outer optical sensor.

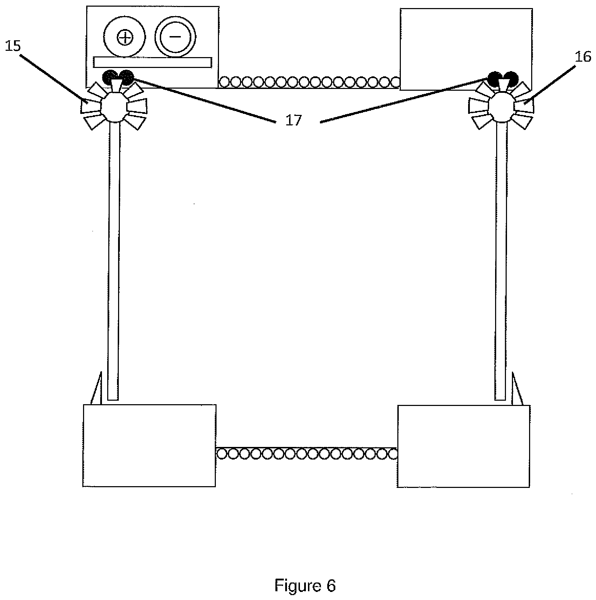

Figure 6 shows another implementation of a pet door. Here the pet door comprises an inner door rotation sensor 15 and an outer door rotation sensor 16. Each rotation sensor comprises a set of fins that interrupt photointerruptors 17. Each photointerruptor comprises two optical sources setup in quadrature so that both the degree of movement and the direction of movement may be determined. No proximity detector is needed in this case as the approach of an animal from the inside or outside of the house may be determined from the door rotation sensors. If an animal approaches from the inside of the house the inner rotation sensor will be activated first. Similarly if an animal approaches from the outside of the house the outer rotation sensor will be activated first.

Various other alternative combinations of proximity sensor and angle sensor are also possible. These include the use of an inner proximity sensor, as shown in figure 2 in combination with an inner rotational sensor as shown in figure 6. Such an arrangement would have the advantage of being able to determine whether an animal had approached from the inside or outside of the house, whilst keeping all the electronics and sensors close to the inside of the house. Such an arrangement may be advantageous in ensuring all electronics are kept away from water damage associated with exposure to the elements.

Where the direction of approach of the animal is known, as in some arrangements above, the inner and outer locks may be controlled independently. If an animal has approached from the inside of the house and its ID number means it should be allowed access to the outside then only the outer lock need be opened up. Similarly if an animal has approached from the outside of the house and its ID number means it should be allowed access to the inside then only the inner lock need be opened up. Such independent control of the two locks results in a power saving when compared to activation of the two locks in parallel.

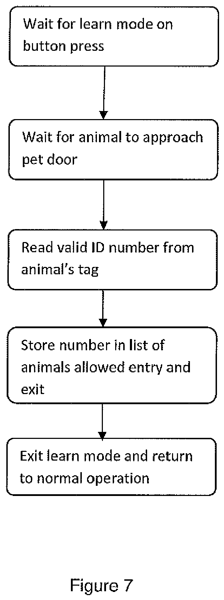

Implementations of learn modes are now described that allow the setup and storage if the lists of allowed ID numbers for animals to enter or exit the house. Figure 7 shows a flow chart for a single learn mode to setup a single list of animals allowed to enter and exit the house. Animals not on this list are not allowed to exit the house, or enter it. A button may be pressed that sets the pet door into learn mode. When in this state it waits for an animal to approach and trigger the proximity detector. Once its ID code is read error checking such as a CRC error check may be performed to make sure it is a valid ID number. Then the number may be stored in memory, forming part of the list of animals allowed to enter and exit the house. Once this is complete the pet door exits learn mode.

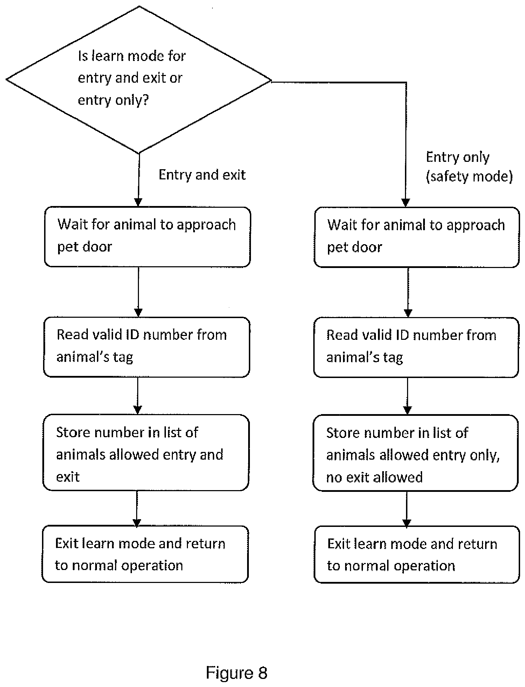

Figure 8 shows an alternative implementation of learn modes. Here the pet door has a first learn mode that allows corresponding animals entry and exit from the house and a second safety learn mode. In the safety mode animals are allowed entry but not exit from the house. Such a safety mode is beneficial when an animal not normally allowed outside escapes from the house and it will be allowed back inside. Figure 8 shows a flow chart for the operation of the two learn modes.

In an alternative implementation the pet door has a first learn mode for all animals allowed to exit the house and a second for all animals allowed to enter the house.

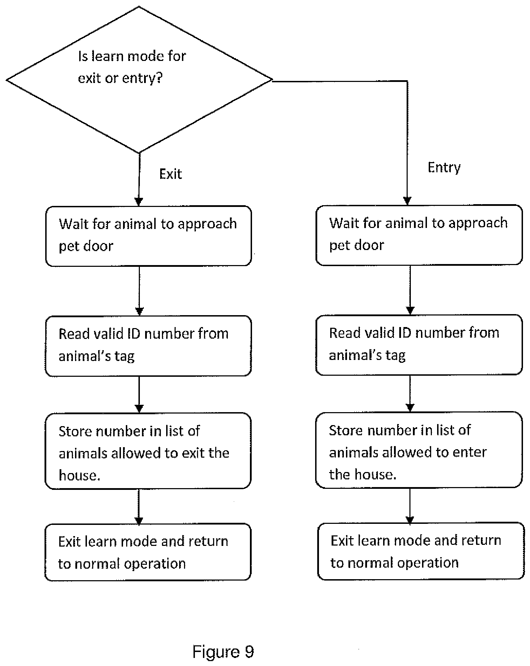

Figure 9 shows a flow chart for the operation of these two learn modes. The pet owner is required to go through the learn process multiple times for their different pets. For example if they have two cats, one of which is kept indoors then they would put one animal through the first learn mode and both animals through the second learn mode. This would ensure that only the correct animal is allowed outside, but if the wrong animal were somehow to escape then it would still be allowed inside. These learn modes allow equivalent operation to the safety mode described above.

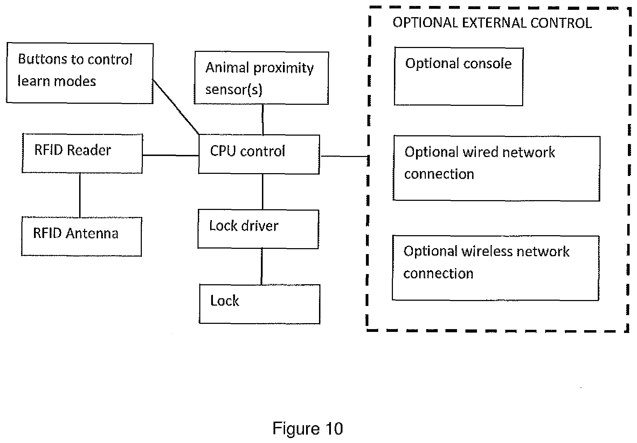

An alternative approach to the setup of the lists of animals allowed entry or exit is to program their numbers in using a console. Such a console might take the form of a keypad on the pet door, where the ID codes are keyed into the keypad. Alternatively it might be an web page setting up the pet door remotely via the internet with a wired connection to the pet door. Alternatively it might be over a web page via the internet with a wireless connection to the pet door. Figure 10 shows a block diagram of the different pet door elements, including the following:
1) central CPU
2) RFID reader and antenna
3) Animal proximity detectors
4) Button control
5) Lock and lock driving electronics
6) Optional connection to a console, wired network, or wireless network.

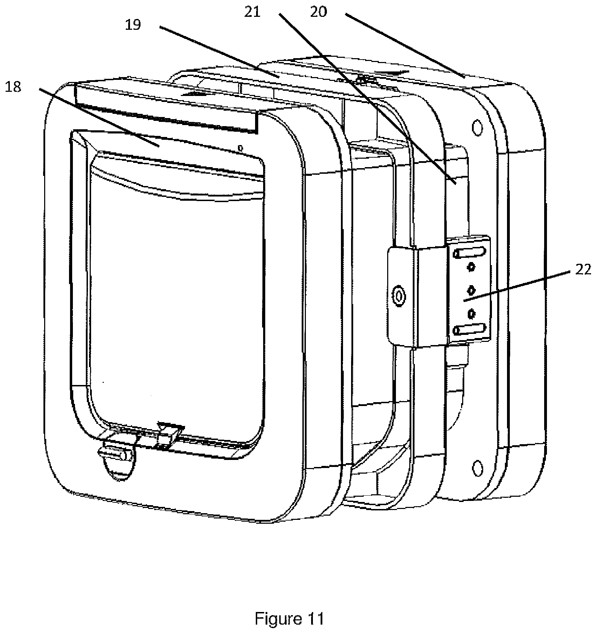

Figure 11 shows a pet door mounting method. A first assembly 18 includes the inner door and tunnel that incorporates the antenna. The first assembly is mounted in place, with an external frame 19 clamping it into place on the other side of the door (door not shown in figure 11). A second assembly 20 includes the outer door and a collar 21 that mates with the end of the tunnel of the first assembly. This is pushed onto the end of the tunnel. A separate set of fixings 22 connect the second assembly to the first assembly permanently via the external frame. This set of fixings is adjustable in length before it is fixed in place in order to cope with the variable position of the tunnel end in relation to the external frame that is a consequence of the first assembly being mounted into different door thicknesses. Finally an external cover (not shown in figure 11) may be used to cover the gap from the second assembly to the external frame. In this assembly the pet door looks like a conventional pet door installation on the inside of the house, which is the most important side aesthetically. The increased depth of the whole assembly pokes out of the door towards the outside of the house. An optional cosmetic cover may be used to cover the region between the external frame 19 and the second assembly 20.

One advantage of the above method is that most mouldings are common to the case of a selective entry pet door. Therefore this reduces the cost of investment in mould tools.

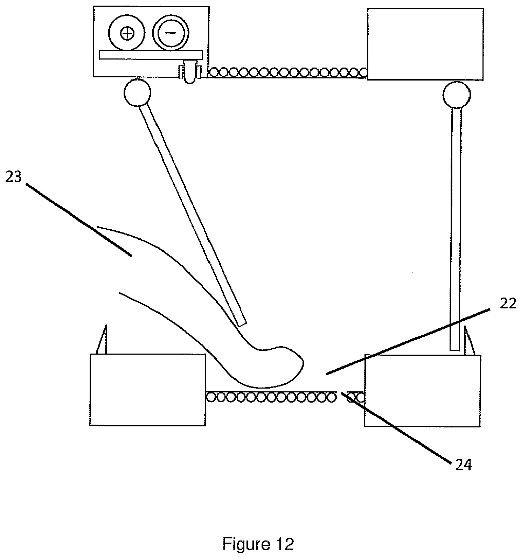

Figure 12 shows a side view of a pet door which includes a step down 22 between the inner and outer doors. An animal's paw 23 is shown poking out under the inner door and this extends into the step down region. If this paw is pulled back then the door will move harmlessly out of the way. Without such a step down feature there is a possibility that such an actions would result in a paw being pinched under the door. This step down is therefore a useful safety feature. When used in combination with an inner and outer door, such a step down feature forms an enclosed region where water can collect. One or more drain holes 24 is therefore a beneficial feature of this and other implementations.

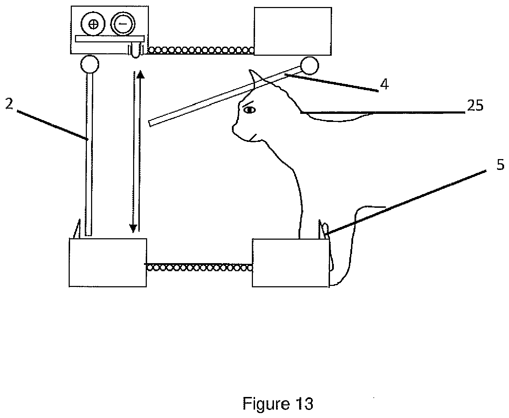

Figure 13 shows an intruder animal 25 attempting to enter the house from the outside. One possible mode of entry of an intruder animal for many pet doors is to pull a door open from the outside, then gaining entry to the inside under the door. In figure 13 the outer door 4 cannot be opened because of the outer lock 5. Instead the outer door is pushed inwards by the intruder. Now the inner door 2 cannot be pulled open outwards because the outer door 5 obstructs it. The intruder animal is unable to gain entry by putting any doors open from the outside of the house. Such an arrangement with two doors therefore has application in preventing access to the home for intruder animals. This benefit may be useful even when not combined with the selective exit function. The outer lock 5 is not a requirement when implementing only the anti-intruder function without the selective exit function. Alternatively selective exit may be implemented with one or mode locks on the inner door, with the outer door being used solely for the purpose of the anti-intruder function. The minimum requirement is that the inner door has at least one lock to selectively allow access to the house and deny access to the house through the inner door for the intruder animal.

All implementations may also include a draft excluder providing at least a partial seal of the door to the sides of the pet door assembly. The double door arrangement has the advantage of increased draft exclusion relative to a single door. This can result in greater heat insulation of the house which can be a benefit.

The safety mode described above is not limited to the double door arrangement described in previous implementations. In fact this feature is beneficial in any pet door that includes the selective exit function. Use of this safety mode, different lists for animals entering and exiting the house, and multiple learn modes to setup such operation may be used in the embodiment of the present invention as shown in figure 14. Figure 14 shows a pet door with a single door 26 and two RFID antennae 27 on either side of the door. Two animal proximity detectors 28 on each side of the door are used and locks 29 on each side of the door are used to control access to the inside and outside of the house. Such an embodiment does not have the cost advantage that results from some of the earlier embodiments but is still a feasible scheme to implement selective entry/exit from the house. As such, for all the reasons identified above, it also benefits from the use of a safety mode, different lists for animals entering and exiting the house, and multiple learn modes to setup such operation.

In some preferred implementations of this 'safety mode' door the antenna that is split with part on one side of a door and part on the other. An example is illustrated in Figure 14, although the two parts of the split antenna may have different dimensions and/or numbers of windings. For example the antenna may have more turns on the inside where the tunnel there is shorter, in an embodiment in which the flap is towards the inside of the house and the tunnel extends through the exterior wall. Additionally or alternatively in such an embodiment the part of the loop antenna on the inside may have a smaller dimension (transverse cross-sectional area).

In preferred embodiments the two parts of the antenna are connected in series and driven together, and hence couple together inductively. This is not essential - the antenna parts may be connected in parallel, but then potentially one antenna part can take more of the shared current than the other.

Surprisingly it has been found that connecting the antennas together, in particular in series, provides almost the same effectiveness (eg field energy/read range) as if each antenna were operated separately. For example, the reader could be switched between the antennas, which might be presumed to be a better approach. However in practice the RFID tag reading involves driving an antenna, and when only one antenna is driven at once this can induce relatively high voltages in the other antenna, which in turn requires a circuit design to accommodate this. Connecting the antennas together, in either series or in parallel, mitigates this whilst providing almost the same effectiveness as when operating the loops separately. In embodiments the end result is an antenna with similar properties to an antenna on the outside only, but with an improved field pattern for good read range on both sides of the door.

Although it is preferable to employ two locks in this manner it is not essential - for example a single lock or locking mechanism could operate on the hinge of the moveable flap to control access through the door.

Many alternative implementations of a selective pet door are also possible, including ones with a single RFID antenna and single door. The use of the safety mode, different lists for animals entering and exiting the house, and multiple learn modes to setup such operation may also have beneficial application in such implementations.

One advantage of this arrangement of two doors with an antenna in between, common to all the variants described, is that whenever an animal is trying to enter or exit the house it puts its head through the RFID antenna. The antenna is therefore placed closer to the RFID tag on or under the skin of the pet. The read range of the RFID reader in the pet door is now very similar to that of a purely selective entry pet door, as disclosed in EP2080172. Furthermore, in order to achieve this similar read range there is a cost saving over alternative setup where one door is used and two antennae are used, one situated on the inside and one on the outside of the door. Such an alternative arrangement has the added cost of the second antenna and associated electronics, whereas the arrangement disclosed here only requires the second door and locking mechanism.

In variants the pet door may include additional locks to control opening of the two doors in either direction. These may be manual override locks that stop opening in one or both directions. Alternatively it may comprise an additional electronic lock on one or both of the doors. Use of such additional locks may include keeping pets in at night or locking the door completely for security when the pet door is not in use. Control over the locks may be electronic and may use a timer to change the locking mode depending on the time of day. Setup and control of the locking modes may be via buttons on the pet door or via an external panel or computer connected to the pet door via a cable or wireless interface. The locking mode may be controlled over the internet. A manual override lock 18 is shown in figure 1.

We have described a range of smart pet doors that operate from an RFID tag either attached to a pet or embedded under the skin of the pet. Specifically variants relate to the implementation of both selective entry and exit.

Thus we have also described techniques for setup of a pet door with two doors and selective exit implemented; a pet door with an RFID antenna substantially in between the two doors; and a pet door using proximity sensors (which may be rotational sensors), more particularly use of the sensors to detect the direction of approach of the pet. We have also described techniques for selective exit where the list of animals allowed to enter the house is not the same as the list of animals to exit the house, in particular used as a safety feature to avoid animals being locked out. These techniques may be used in combination with direction of approach information of the pet to determine to which list to compare the read ID code. We have also described a pet door with a single learn mode for one list of animals allowed to enter and exit the house; two learn modes to selectively program animals to enter and exit and animals to enter only; and two learn modes for animals to enter the house and those to exit the house. Additionally or alternatively animal entry/exit control data may be via a console, for example via a keypad or web page. We have also described a pet door with control over one or more flaps of the door via the internet, for example via a wireless connection.

No doubt many other effective alternatives will occur to the skilled person. It will be understood that the invention is not limited to the described embodiments and encompasses modifications apparent to those skilled in the art lying within the scope of the claims appended hereto.

## Claims

1. A selective pet door allowing selective control of pet entry/exit to/from a building, the pet door comprising:
a tunnel portion defining a tunnel for entry/exit of a pet;
at least one moveable flap (26) within said tunnel;
a controllable lock (29) for the flap (26); and
a tag reader to read a tag on a pet identifying the pet and to control said controllable lock (29) to control movement of a pet through the pet door; and
a loop antenna (27) for said tag reader, wherein said loop antenna (27) encompasses said tunnel,
**characterised in that**:
said loop antenna (27) is split such that a first and second portions of said loop antenna (27) are disposed to either side of said moveable flap (26).

2. A selective pet door as claimed in claim 1 wherein said first and second portions of said loop antenna (27) are connected in series with one another and couple together inductively.

## Patentansprüche

1. Selektive Tür für Haustiere, eine selektive Kontrolle des Betretens/Verlassens eines Gebäudes durch ein Haustier erlaubend, wobei die Tür für Haustiere Folgendes umfasst:
einen Tunnelabschnitt, der einen Tunnel für das Betreten/Verlassen eines Haustiers definiert;
mindestens eine bewegliche Klappe (26) innerhalb des Tunnels;
einen kontrollierbaren Verschluss (29) für die Klappe (26); und
einen Tag-Leser zum Lesen eines Tags an einem Haustier, das das Haustier identifiziert, und zur Kontrolle des kontrollierbaren Verschlusses (29) zur Kontrolle der Bewegung eines Haustieres durch die Tür für Haustiere; und
eine Schleifenantenne (27) für den Tag-Leser, wobei die Schleifenantenne (27) den Tunnel umschließt,
**dadurch gekennzeichnet, dass**:
die Schleifenantenne (27) derart aufgeteilt ist, dass ein erster und zweiter Abschnitt der Schleifenantenne (27) auf je einer der beiden Seiten der beweglichen Klappe (26) angeordnet sind.

2. Selektive Tür für Haustiere gemäß Anspruch 1, wobei der erste und zweite Abschnitt der Schleifenantenne (27) in Reihenschaltung miteinander verbunden und induktiv miteinander gekoppelt sind.

## Revendications

1. Porte sélective pour animal domestique permettant un contrôle sélectif d'entrée/de sortie d'animaux domestiques dans un bâtiment/de ce dernier, la porte pour animal domestique comprenant :
une portion en forme de tunnel, définissant un tunnel pour l'entrée/la sortie d'un animal domestique ;
au moins un volet mobile (26) à l'intérieur dudit tunnel ;
une serrure contrôlable (29) pour le clapet (26) ; et
un lecteur d'étiquettes pour la lecture d'une étiquette sur un animal domestique identifiant l'animal domestique, et pour le contrôle de ladite serrure contrôlable (29), en vue de contrôler le mouvement d'un animal domestique à travers la porte ; et
une antenne en boucle (27) pour ledit lecteur d'étiquettes, l'antenne en boucle (27) encerclant ledit tunnel,
**caractérisée en ce que** :
ladite antenne en boucle (27) est divisée de telle manière qu'une première et une deuxième section de ladite antenne en boucle (27) soient disposées de chaque côté dudit volet mobile (26).

2. Porte sélective pour animal domestique selon la revendication 1, dans laquelle lesdites première et deuxième sections de l'antenne en boucle (27) soient connectées en série l'une avec l'autre et couplées de manière inductive.
